# EUROPÄISCHE PATENTSCHRIFT

(11) **EP 1 840 055 B1**
(45) Veröffentlichungstag und Bekanntmachung des Hinweises auf die Patenterteilung: **13.02.2013**
(21) Anmeldenummer: 07004883.0
(22) Anmeldetag: 09.03.2007
(51) Int. Cl.: B65G 53/24, B65G 53/66, A24C 5/39

(54) **Verfahren zur Regelung der Fördermenge von pneumatisch transportiertem Schnitttabak**
Method for regulating the flow of pneumatically transported cut tobacco
Procédé destinés à la régulation du refoulement de tabac coupé transporté sur pneumatique

(30) Priorität: 13.03.2006 DE 102006011742
(43) Veröffentlichungstag der Anmeldung: 03.10.2007
(73) Patentinhaber: Riedel Filtertechnik GmbH, 33818 Leopoldshöhe (DE)
(72) Erfinder: Roether Dr.-Ing., Friedemann, 22083 Hamburg (DE)
(74) Vertreter: Schober, Mirko

(56) Entgegenhaltungen:
- AU-B2- 629 083
- DE-A1- 10 332 869

## Beschreibung

Die Erfindung betrifft ein Verfahren zur Regelung der Fördermenge von pneumatisch transportiertem Leichtgut, insbesondere Schnitttabak oder Tee, nach dem Oberbegriff des Anspruchs 1.

Ein Verfahren nach dem Oberbegriff des Anspruchs 1 ist aus DE 103 32 869 A1 bekannt.

Bekannte Saugförderanlagen für Schnitttabake werden dazu eingesetzt, insbesondere Schnitttabake zu Zigarettenherstellungsmaschinen zu fördern. Der Schnitttabak muss dabei möglichst schonend und mit niedriger und konstanter Geschwindigkeit transportiert werden. Aus diesem Grund ist eine Regelung der Fördergeschwindigkeit im Förderrohr der Anlage vorgesehen.

Bekannt ist, über Sensoren Druckabfälle in den Rohren der Saugförderanlage zu messen und diese Messwerte einer Regeleinheit zu einem Soll-/Istwertvergleich zuzuführen. Hierfür ist beispielsweise innerhalb des Saugrohrs eine Messblende angeordnet, die den Querschnitt des Saugrohrs verengt. Die Regeleinheit stellt dann die Abdeckung der Drosselklappe im Saugrohrquerschnitt ein. In der DE 103 32 869 A1 ist bei der Anwendung von Differenzdruckmesswerten vorgeschlagen, definierte Abstände zwischen den einzelnen Druckmesspunkten vorzusehen, über die der Druckabfall gemessen wird, um eine höhere Genauigkeit hinsichtlich des Soll-/Istwertvergleichs zu erhalten.

Allen Druckdifferenzwertmessmethoden ist insbesondere bei der pneumatischen Förderung von Schnitttabak nachteilig, dass die Geschwindigkeit des Fördermediums, also des Luftstroms, und die Geschwindigkeit des darin transportierten Tabaks nicht identisch sind. Das Berechnen der Förderstromgeschwindigkeit aus den Druckdifferenzen gibt nur bedingt die tatsächliche Geschwindigkeit des Fördergutes im Förderstrom wieder. Hierunter leidet die Einstellgenauigkeit hinsichtlich Förderbeanspruchung des Schnitttabaks.

Die AU 629 083 B2 offenbart eine Vorrichtung zum Trocknen von Pulvern und Granulaten in einem Rohr. Beschrieben ist dazu ein Verfahren zur Regelung der Fördermenge von pneumatisch transportiertem Leichtgut, z.B. Kaffee oder Milchpulver. Der Transport erfolgt durch Unterdruck. Diese Vorrichtung ist für Schnitttabak nicht geeignet.

Aufgabe der vorliegenden Erfindung ist es, ein Verfahren bereitzustellen, bei der die tatsächliche Geschwindigkeit des zu transportierenden Leichtguts im Förderstrom genauer erfasst wird, um eine bessere Einstellbarkeit des in der Anlage vorherrschenden Förderstroms vornehmen zu können.

Erfindungsgemäß wird diese Aufgabe durch ein Verfahren mit den Merkmalen des Anspruchs 1 gelöst. Dabei ist vorgesehen, dass als Istwert und als Sollwert eine Absolutgeschwindigkeit des Leichtguts im Förderstrom gemessen wird und der Istwert mit einem Sensor festgestellt wird. Hinsichtlich der Saugfördereinrichtung sieht die Lösung der erfindungsgemäßen Aufgabe das Einsetzen eines Sensors zum Messen der Geschwindigkeit des Leichtguts im Förderstrom vor.

Durch das Messen der tatsächlichen Geschwindigkeit des Leichtguts innerhalb des Förderstroms ohne den Umweg über die Geschwindigkeit des Förderstroms, um damit die Geschwindigkeit des Fördermediums zu ermitteln, wird ein genaueres Einstellen des Förderstroms und damit schonenderes und sicheres Transportieren des Leichtguts ermöglicht. Des Weiteren kann die Menge des benötigten Fördermediums exakter eingestellt werden, womit unnötige Fördermediumverbräuche vermieden werden, was sich signifikant auf die Kosten für das Zuführen des Leichtguts auswirkt.

Vorteilhafterweise handelt es sich bei den Bestandteilen der Saugförderanlage bei dem Separator um eine Trennschleuse und bei dem pneumatischen Fördermedium um einen Luftstrom.

Eine weitere vorteilhafte Lehre der Erfindung sieht vor, dass die Geschwindigkeit des Leichtguts im Beschickungsrohr selber gemessen wird, da an dieser Stelle die höchste Belastung auf das Fördergut einwirkt, womit an dieser Stelle die Optimierung selber vorgenommen werden sollte. Eine weitere Lehre der Erfindung sieht vor, dass das Messen der Geschwindigkeit optisch, kapazitiv und/oder elektrostatisch vorgenommen wird. Diese drei Verfahren ermöglichen ein Messen der Geschwindigkeit des Leichtguts innerhalb des Förderstroms.

Eine weitere erfindungsgemäße Lehre sieht vor, dass der Ausgang der Regeleinheit für die Fördergeschwindigkeit auf eine zweite Regeleinheit als Sollwert geschaltet wird, der Istwert aus einem direkt mit der Klappenpositionierung in Verbindung stehenden Messwert (Luftdruck oder Luftgeschwindigkeit) gebildet wird. Die Istwertaufnahme erfolgt bevorzugt zwischen Separator und Regelklappe. Hierdurch lässt sich ein zusätzliches Kontrollieren der durch den ersten Sensor ausgenommenen Messwerte vornehmen und der Sollwert wird stabilisiert.

Die Erfindung wird nachfolgend anhand der Zeichnung in einem vorteilhaften Ausführungsbeispiel einer erfindungsgemäßen Saugförderanlage näher erläutert.
Fig. 1 zeigt dabei eine schematische Ansicht einer ersten Ausführungsform einer erfindungsgemäßen Saugförderanlage,
Fig. 2 zeigt eine schematische Ansicht einer zweiten Ausführungsform einer erfindungsgemäßen Saugförderanlage.

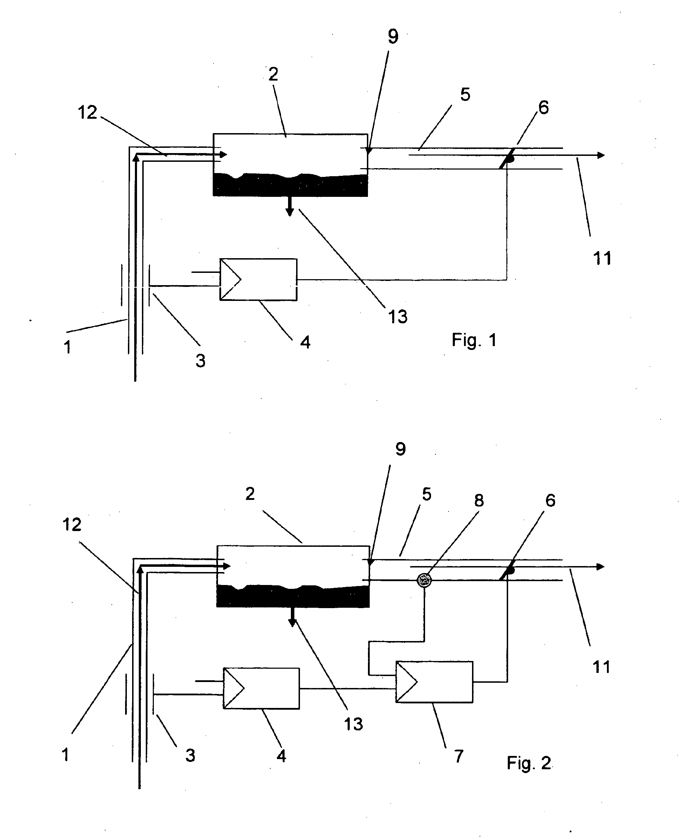

Fig.1 zeigt ein Diagramm eines Ablaufs eines erfindungsgemäßen Verfahrens und der erfindungsgemäßen Saugförderanlage, in der mittels eines Fördermediums 11 ein Leichtgut 13 als Gutstrom 12 gefördert wird. Die Förderstrecke der Saugförderanlage besteht aus einem Beschickungsrohr 1, das in eine Schleuse 2 mündet. Am hinteren Ende der Schleuse 2 ist ein Filter 9 angeordnet, durch den die Förderluft 11 hindurchtreten kann, das Leichtgut 13 allerdings wird daran abgetrennt und verbleibt in der Schleuse 2. Aus der Schleuse 2 heraus wird das Leichtgut 13 der Weiterverarbeitungsvorrichtung (nicht dargestellt) zugeführt. Hinter dem Filter 9 ist ein Saugrohr 5 angeordnet, an dessen Ende eine Unterdruck erzeugende Gebläseeinheit (nicht dargestellt) angeordnet ist. Zwischen Filter 9 und Gebläseeinheit befindet sich eine verstellbare Regelklappe 6.

Am Beschickungsrohr 1 ist ein Sensor 3 angeordnet, der mit einer Regeleinheit 4 verbunden ist. Die Regeleinheit 4 wiederum ist mit der Regelklappe 6 verbunden. Die Regelklappe 6 selber ist kontinuierlich verstellbar ausgeführt und wird durch die Regeleinheit 4 angesteuert und entsprechend den Regelanforderungen hinsichtlich Ist-/Sollwertdifferenz eingestellt.

Durch das Gebläse wird in der Vorrichtung ein Unterdruck erzeugt, durch den das Fördergut 13 zusammen mit dem Fördermedium 11 in das Beschickungsrohr 1 eingesaugt wird. Der Sensor 3 ermittelt dabei die Ist-Geschwindigkeit des Förderguts 13 im Förderstrom 12. Die vollständig geöffnete Regelklappe 6 wird über das Regelelement 4 derart angesteuert, dass bei optimal eingefahrener Anlage der Soll- und Istwert identisch sind. In der Schleuse 2 tritt das Fördermedium 11 durch den Filter 9 hindurch und strömt im Saugrohr 5 an der Regelklappe 6 vorbei, gegebenenfalls gedrosselt, zur Saugeinheit. Das Leichtgut 13 fällt in der Schleuse 2 zum einen durch die Geschwindigkeitsverringerung aufgrund des höheren Strömungsquerschnitts in der Schleuse 2 und zum anderen durch die Sperre durch den Filter 9 aus und sinkt nach unten.

Vor Beginn der Förderung befindet sich die Regelklappe 6 oder eine an der Gebläseeinheit bzw. zwischen Gebläseeinheit und Regelklappe 6 angeordnete Verschlussklappe (nicht dargestellt) in vollständig geschlossenem Zustand, so dass im Saugrohr 5 trotz anliegendem Unterdruck keine Förderung stattfindet. Die Förderung wird erst dadurch gestartet, dass die Regelklappe 6 auf einen ersten vorgegebenen Wert, hier der Verdrehung, eingestellt wird oder die Verschlussklappe geöffnet wird. Die Förderung wird dadurch aufgenommen und das Messen durch den Sensor 3 beginnt. In der Regeleinheit werden die von dem Sensor 3 ermittelten Istwerte mit einem vorab eingegebenen Sollwert der Geschwindigkeit des Fördergutes 13 innerhalb des Gutstroms 12 verglichen und der Verdrehwinkel wird entsprechend den Vorgaben, so die Geschwindigkeit zu steigern oder abzusenken ist, vergrößert oder verkleinert, so dass die tatsächlich durch die Förderklappe 6 hindurchtretende Luft 11 entsprechend variiert werden kann. Die Förderung wird in dem Moment durch Schließen der Klappe 6 oder der zusätzlichen Verschlussklappe unterbrochen, indem die Schleuse als solches kein weiteres Produkt 13 mehr aufnehmen kann.

Fig. 2 zeigt eine weitere Ausführungsform einer erfindungsgemäßen Saugförderanlage, die, zusätzlich zu dem in Fig. 1 gezeigten, eine weitere Regeleinheit 7 und einen weiteren Sensor 8 aufweist. Der Sensor 8 ist im Saugrohr 5 zwischen Schleuse 2 und Regelklappe 6 angeordnet und mit dem Regler 7 verbunden. Der Regler 7 bekommt das Ergebnis des Soll-/Istwertvergleichs von der Regeleinheit 4 zugeführt. Im Regler 7 wird ein Vergleich aus dem vom Sensor 8 ermittelten Wert mit einem Sollwert und das Ergebnis in Kombination mit dem Wert der Regeleinheit 4 weiterverarbeitet und davon ausgehend ermittelt, wie die Regelklappe eingestellt werden muss. Die von dem Sensor 8 ermittelte Messgröße kann eine Kontrolle der Klappenstellung als solches sein, der Rohrinnendruck oder die Geschwindigkeit der Förderluft 11. Durch diesen zweiten Messwert kann die Plausibilität des Messergebnisses ersten Sensors 3 und daraus resultierend des Soll-/Istwertvergleichs in der Regeleinheit 4 überprüft werden und gegebenenfalls bei Unplausibilität für die Regelung der Klappensteuerung vernachlässigt werden.

## Patentansprüche

1. Verfahren zur Regelung der Fördermenge von pneumatisch transportiertem Leichtgut (13) in einer Saugförderanlage zur Zufuhr des Leichtguts (13) zu einer Weiterverarbeitungsvorrichtung, insbesondere einer Zigarettenherstellungsmaschine, die ein Beschickungsrohr (1), einen daran anschließenden Separator (2) zur Trennung des Leichtguts (13) von einem pneumatischen Fördermedium (11), ein an den Separator (2) angeschlossenes Saugrohr (5), wobei im Saugrohr (5) eine einstellbare Regelklappe (6) zur Steuerung des pneumatischen Fördermediums (11) angeordnet ist, und eine mit einem Sensor (3) verbundene Regeleinheit (4) aufweist, mit den Schritten: Erzeugen eines aus dem pneumatischen Fördermedium (11) und dem Leichtgut (13) bestehenden Gutstroms (12) in der Saugförderanlage, Regeln der Fördermenge des Leichtguts (13) durch Ändern des Saugrohrquerschnitts durch Verstellen des Abdeckgrades des Saugrohrsquerschnitts durch die Regelklappe (6), Einstellen des Querschnittabdeckgrades der Regelklappe (6) im Saugrohrsquerschnitt durch die Regeleinheit (4), wobei die Einstellung über einen Sollwert/Istwertabgleich in der Regeleinheit (4) erfolgt, **dadurch gekennzeichnet,**
**dass** es sich bei dem Leichtgut um Schnitttabak handelt, und dass es sich bei dem Istwert und dem Sollwert um eine Absolutgeschwindigkeit des Leichtgutes (13) im Förderstrom (12) handelt und der Istwert mit einem Sensor (3) festgestellt wird.

2. Verfahren nach Anspruch 1,
**dadurch gekennzeichnet,**
**dass** es sich bei dem Separator (2) um eine Trennschleuse handelt.

3. Verfahren nach Anspruch 1 oder 2,
**dadurch gekennzeichnet,**
**dass** es sich bei dem pneumatischen Fördermedium (11) um einen Luftstrom handelt.

4. Verfahren nach einem der Ansprüche 1 - 3,
**dadurch gekennzeichnet,**
**dass** die Geschwindigkeit des Leichtguts (13) im Beschickungsrohr (1) gemessen wird.

5. Verfahren nach einem der Ansprüche 1 - 4,
**dadurch gekennzeichnet,**
**dass** die Geschwindigkeit optisch, kapazitiv und/oder elektrostatisch gemessen wird.

6. Verfahren nach einem der Ansprüche 1 - 5,
**dadurch gekennzeichnet,**
**dass** ein zweiter Istwert vom ersten Istwert unterschiedlicher Art zwischen Separator (2) und Regelklappe (6) aufgenommen wird.

7. Verfahren nach Anspruch 6,
**dadurch gekennzeichnet,**
**dass** ein zweiter Sollwert/Istwertvergleich mit dem zweiten Istwert oder mit dem zweiten Istwert in Verbindung mit dem ersten Istwert vorgenommen wird.

## Claims

1. Method for regulating the flow of pneumatically transported lightweight material (13) in a suction conveying installation for feeding the lightweight material (13) to a further processing apparatus, in particular a cigarette production machine, which comprises a feed pipe (1), a separator (2) connected thereto for separating the lightweight material (13) from a pneumatic conveying medium (11), a suction pipe (5) connected to the separator (2), wherein an adjustable regulating valve (6) is arranged in the suction pipe (5) for controlling the pneumatic conveying medium (11), and a regulating unit (4) connected to a sensor (3), with the following steps:
producing a material flow (12) consisting of the pneumatic conveying medium (11) and the lightweight material (13) in the suction conveying installation;
regulating the flow of the lightweight material (13) by changing the suction pipe cross-section through the adjustment of the degree of coverage of the suction pipe cross-section by the regulating valve (6);
adjusting the degree of coverage of the regulating valve (6) in the suction pipe cross-section through the regulating unit (4), the adjustment being carried out by means of a reference value / actual value alignment in the regulating unit (4),
**characterised in that**
the lightweight material is cut tobacco and the actual value and the reference value represent an absolute speed of the lightweight material (13) in the conveying flow (12) and the actual value is determined with a sensor (3).

2. Method according to claim 1,
**characterised in that**
the separator (2) is a separating sluice-type element.

3. Method according to claim 1 or 2,
**characterised in that**
the pneumatic conveying medium (11) is an air flow.

4. Method according to one of the claims 1 - 3, **characterised in that**
the speed of the lightweight material (13) is measured in the feed pipe (1).

5. Method according to one of the claims 1 - 4, **characterised in that**
the speed is measured optically, capacitively and / or electrostatically.

6. Method according to one of the claims 1 - 5, **characterised in that**
a second actual value of a type differing from the first actual value is recorded between the separator (2) and regulating valve (6).

7. Method according to claim 6,
**characterised in that**
a second reference value / actual value comparison is carried out with the second actual value or with the second actual value in association with the first actual value.

## Revendications

1. Procédé destiné à la régulation de la quantité de produit léger (13) transporté pneumatiquement dans une installation de transport à aspiration pour l'amenée du produit léger (13) à un dispositif de traitement ultérieur, en particulier à une machine de fabrication de cigarettes, qui est dotée d'un tube d'alimentation (1), d'un séparateur (2), raccordé à celui-ci pour la séparation du produit léger (13) d'un agent de transport pneumatique (11), d'un tube d'aspiration (5), raccordé au séparateur (2), sachant que, dans le tube d'aspiration (5), un clapet de réglage (6) est installé pour la commande de l'agent de transport pneumatique (11) et présente une unité de réglage (4), qui est reliée à un capteur (3), les étapes étant : production, dans l'installation de transport à aspiration, d'un flux de produit (12) composé de l'agent de transport pneumatique (11) et du produit léger (13), régulation de la quantité de produit léger transporté (13) par modification de la section transversale du tube d'aspiration par ajustage du degré de recouvrement de la section transversale du tube d'aspiration au moyen du clapet de réglage (6), réglage du degré de recouvrement de la section transversale du clapet de réglage (6) dans la section transversale du tube d'aspiration par l'intermédiaire de l'unité de réglage (4), sachant que le réglage est effectué par une comparaison valeur de consigne / valeur réelle, dans l'unité de réglage (4),
**caractérisé en ce que**,
le produit léger est du tabac coupé et que la valeur réelle et la valeur de consigne sont une vitesse absolue du produit léger (13) dans le flux de transport (12) et que la valeur réelle est déterminée par un détecteur (3).

2. Procédé selon la revendication 1, **caractérisé en ce que** le séparateur (2) est un sas d'isolement.

3. Procédé selon revendication 1 ou 2, **caractérisé en ce que** l'agent de transport pneumatique (11) est un flux d'air.

4. Procédé selon l'une des revendications 1 à 3, **caractérisé en ce que** la vitesse du produit léger (13) est mesurée dans le tube d'alimentation (1).

5. Procédé selon l'une des revendications 1 à 4, **caractérisé en ce que** la vitesse est mesurée de manière optique, capacitive et / ou électrostatique.

6. Procédé selon l'une des revendications 1 à 5, **caractérisé en ce qu'**une deuxième valeur réelle, de nature différant de celle de la première valeur réelle, est relevée entre le séparateur (2) et le clapet de réglage (6).

7. Procédé selon la revendication 6, **caractérisé en ce qu'**une deuxième comparaison valeur de consigne / valeur réelle est effectuée avec la deuxième valeur réelle ou avec la deuxième valeur réelle en relation avec la première valeur réelle.
